Europäisches Patentamt

European Patent Office

Office européen des brevets

(19)

(11) Publication number: **0 076 046**

**A1**

(12) **EUROPEAN PATENT APPLICATION**

(21) Application number: 82304670.1

(22) Date of filing: 06.09.82

(51) Int. Cl.³: **H 02 G 15/06**
**H 01 R 4/36**

(30) Priority: 25.09.81 US 305392

(43) Date of publication of application:
06.04.83 Bulletin 83/14

(84) Designated Contracting States:
AT BE CH DE FR GB IT LI LU NL SE

(71) Applicant: G & W ELECTRIC COMPANY
3500 West 127th Street
Blue Island Illinois(US)

(72) Inventor: Fox, James William
8720 West 167th Place
Orland Park Illinois(US)

(74) Representative: Mayes, Stuart David et al,
BOULT, WADE & TENNANT 27 Furnival Street
London, EC4A 1PQ(GB)

(54) High voltage power cable terminator with ridged connector bore.

(57) The connecting lug (10) of an electrical terminator (12), which connects the exposed end of a shielded cable conductor (14) to a second conductor (16), has a hood portion (19) with a closed bore (20) for receiving the exposed end (26) of a conductor (18), threaded openings (28) extending through the side of the bore and set screws (30) received therein for forming a compression fit when torqued against the end of the conductor. Ridges (32) formed in the sidewall of the bore opposite the bearing surfaces (34) of the set screws provide for an improved compression fit of the conductor within the bore.

Fig.1

EP 0 076 046 A1

Croydon Printing Company Ltd.

-1-

# HIGH VOLTAGE POWER CABLE
## TERMINATOR WITH RIDGED CONNECTOR BORE

The present invention relates to electrical terminators or potheads and more particularly to improved hood lugs for terminators which more securely hold the electrical conductor.

Electrical cable, such as that used for underground transmission, is typically comprised of a multistranded electrical conductor, a dielectric insulation layer encasing the conductor, and a shield layer surrounding the insulation layer, the shield being at ground potential. The dielectric insulation layer provides a radial voltage gradient between the conductor and the grounded shield. Aerial cable, on the other hand, is generally unshielded as the amount of electrical loss through the air does not justify the cost of shielding.

Where the underground cable is brought out of the ground, a junction must be made between the shielded underground cable and an unshielded aerial cable. To form such a junction, it is necessary to prepare the underground cable by unwinding end portions of the ground wire and cutting away end portions of the shielding and insulation. While throughout most of the length of the shielded cable, the 100% potential of the conductor is radially dissipated to the 0% potential of the grounded shield uniformly through the dielectric layer, the preparation of the cable end for splicing leaves an unshielded end portion subject to dielectric breakdown from the conductor to the grounded shield. To prevent dielectric failure, terminators such as described in U.S. patent No. 3,796,821 are employed to provide an acceptable gradation of electrical potential between the conductor and the grounded outer shield.

A common type of terminator has an insulating body with an axial passageway through which an insulated, but unshielded, prepared end of cable extends. An annular dielectric layer within the bore and surrounding a portion of the prepared cable end relieves electrical stress between the end portion of the conductor and the shield. The very end of the cable is stripped of insulation, and the exposed conductor end extends beyond the terminator body into an attached connector lug which electrically connects the conductor to the aerial cable. The connector lug includes a hood portion, which fits over and electrically contacts the exposed end of the conductor, and an extension or protruberance for attachment of the aerial cable.

The prepared cable is held within the terminator primarily by the clamping of the exposed conductor end within the hood. The exposed conductor may be held by crimping or, preferably, by set screws received in threaded openings in the hood as described in U.S. Patents Nos. 3,290,428 and 3,796,821. The set screws, which are tightened against the conductor and which may be adjusted to grip conductors within a range of diameters, are the preferred method of clamping a conductor end within a terminator. The set screws are tightened to deform the strands of the conductor conforming the conductor to the inner walls of the bore. The frictional engagement of the set screws with the conductor serves not only to hold the ends of the cables together but provides the electrical contact of the cable with the connector lug, and the importance of achieving and maintaining secure engagement of the cable portions within the hood and good electrical contact therebetween may be easily appreciated.

A terminator embodying the invention may be provided for a prepared end of a shielded cable having a connector lug at its aerial end which provides for improved gripping of the end of the shielded cable and better electrical contact. The connector lug, which seals off the aerial end of the terminator body and connects the shielded cable to the aerial cable, has a hood portion with a closed bore for receiving the exposed conductor end of the shielded cable, threaded openings into the sidewall of the bore which receive threaded set screws, and ridges extending inward from the sidewall of the closed bore opposite the threaded openings whereby a more secure compression fit is achieved when the set screws are tightened to bear against the exposed end of the conductor.

A preferred embodiment of the invention will now be described, by way of example, with reference to the accompanying drawings, in which:

FIGURE 1 is an elevation view, partially cut away, of an electrical terminator embodying various features of the present invention;

FIGURE 2 is an enlarged cross-sectional view of the hood portion of the connector lug of the terminator of FIGURE 1.

FIGURE 3 is a side elevation view, partially cut away, of the connector lug; and

FIGURE 4 is a front elevation view of the connector lug.

An improved connector lug 10 is provided for an electrical terminator 12 which joins a shielded cable 14 with an aerial conductor 16, the improved connector lug increasing the pull-out strength of the terminator-cable connection and lowering electrical resistance between the connector lug and the conductor 18. The connector lug has a closed bore 20 coextensive with a bore or passageway 22 through the body 24 of the terminator 12 for receiving the exposed end 26 of the conductor 18 and threaded openings 28 through the side of the closed bore 20 in which cooperating set screws 30 are received for forming a compression fit with the exposed conductor

-4-

end.  The improved physical and electrical connection is achieved by providing ridges 32 extending inward of the closed bore 20 generally opposite the bearing surfaces 34 of the set screws 30 whereby the exposed end 26 of the conductor 18 is deformed along the ridged sidewall 38 achieving a superior compression fit.

Very generally, the end of a shielded power cable 14 has a terminator 12 applied thereon in telescopic relationship with an electrical stress relief element 46 surrounding the cable at the base end of the terminator.  The terminator 12 includes the rigid body or housing 24, a mounting plate 40 at its base end 42, the connector lug 10 at its aerial end 44, and a filler layer 47 which fills the space intermediate the stress relief element 46 and portions of the insulator body.

The shielded cable 14 includes the conductor 18, dielectric insulation 48 surrounding and encasing the conductor, a shield layer 50 surrounding the dielectric insulation and concentric neutral or ground wires 52 wound around and in contact with the shield layer.

To prepare the end 26 of the cable 14 for insertion into the terminator, the ground wires 52 are initially removed from a portion of the end of the shield and bound to form a common ground wire 54 for subsequent connection to the mounting plate 40.  The shield 50 is stripped beyond the bound ground wires 52 leaving a length of exposed shield, and the insulation 48 is stripped beyond the end of the shield to expose the end of the conductor 18 and leave an intermediate length of exposed insulation.  As a preferred means of forming the stress relief element 46, high dielectric splicing tape is tightly layered around portions of the exposed insulation 48 in a generally tubular configuration.  The end of the stress relief element adjacent the shield layer 50 is optionally bound with

-5-

PVC binding tape 51 that helps to maintain the stress relief element in place as the prepared cable is inserted in the terminator 12.

To ease insertion of the prepared end of the cable 14 into the terminator 12, a lubricant, such as a silicone grease, is applied to the cable insulation 48 and the stress relief element 46. An abrasive anti-oxidant is applied to the exposed conductor 18. The terminator 12 is then slipped over the prepared cable end until the exposed end 26 of the conductor 18 extends beyond the terminator body 24 into the hood portion 19 of the lug 10 and the dielectric insulation 48 extends closely adjacent the aerial end 44 of the body 24. The set screws 30 are torqued to provide a compression fit between the conductor 18 and the sidewall 38 of the closed bore 20, and the aerial conductor 16 is connected to an extension 57 of the connector lug 10.

Referring now in more detail to the illustrated embodiment, porcelain is generally used for the rigid insulator body 24 because it is a self-cleaning, inorganic, homogeneous material which does not carbonize when subjected to leakage currents and is not subject to weathering, radiation, or chemical damage. Porcelain also has high tracking resistance, i.e., the ability of the material to resist the formation of a conductive path by an arc adjacent its surface. Additional materials, however, such as other ceramics, glass and epoxy resins, also may be suitable for the insulator body. The outside surface 60 of the rigid insulator body 24 is finned or corrugated in a conventional manner to increase the creepage distance along the surface between the lug 10 (100% potential) and the mounting plate 40 (0% potential). The inner surface of the rigid insulator body 24 is smooth and includes a surface 62 formed by the general axial passageway 22 therethrough.

-6-

The preferred splicing tape used to form the stress relief element 46 in high voltage terminators is comprised of a heavy paste of silicon carbide particles on an ethylene-propylene rubber backing. Alternatively, the stress relief element 46 might be a tube of closed cell elastomeric dielectric material having an inner diameter proportioned to provide an interference fit around the insulation layer 48.

The filler element 47 is formed of a compressible foam material proportioned to fill the void between the stress relief element 46 and the insulator body 24 helping to avoid dielectric breakdown. The compressible filler layer 47 accommodates stress relief layers 46 within a range of diameters and maintains a void-free fit as the cable expands and contracts with temperature change. The filler element 47 is preferably formed of dielectric elastomers such as silicones, ethylene-propylene rubbers and fluorinated elastomeric copolymers.

Both the mounting plate 40 and the connector lug 10 are made of metal, such as copper alloy or aluminum, and both are firmly applied to the insulator body. As shown, both the mounting plate 40 and the connector lug 10 have deformable cylindrical attachment members 66, 68 which are rolled over annular lips 70, 72 at the respective ends 42, 44 of the terminator body 24. Sealing gaskets 74, 76 of suitable elastomeric material are held against the ends 42, 44 of the body by the mounting plate 40 and the connector lug 10.

The connector lug 10 is formed of a single piece of cast metal, preferably aluminum, and includes the hood portion 19 for connection to the insulator body 24 and to the exposed end 26 of the shielded cable 14 and an extension 57 from its aerial end which has a surface on which the aerial conductor 16 is mounted and clamped. The one piece casting provides good thermal dissipation because there are no thermal interfaces in metallic parts to provide increased resistance to heat transfer. The hood portion 19 is generally cylindrical but has a protrusion 94 along one side through which the set screw openings 28 are bored. The protrusion 94 provides for elongated openings 28 with sufficient threads for holding the required set screw torque. The hood portion 90 has an annular flange 96 at its base end from which the cylindrical attachment member 68 extends. The closed bore 20 extends axially from the base end of the hood portion 19 coextensive with the terminator body passageway 22 and has a diameter appropriate for receiving an exposed conductor end 26 within a given diameter range.

The threaded openings 28 extend through the protrusion 94 of the hood portion 19 generally perpendicular to the axis of the bore 20, and the matched set screws 30 are received therein, the bearing surfaces 34 of the set screws forming a compression fit for holding the exposed end 26 of the conductor 18. At least one set screw 30 is required, but it is preferred that several set screws be provided spaced apart axially relative to the bore 20 and mutually parallel.

As in set screw connector lugs of known design in which the sidewall of the closed bore is smooth, the set screws 30 are tightened to bear against the conductor 18 and hold the conductor between the bearing surfaces 34 of the set screws 30 and the opposite side of the bore. The strands of a stranded conductor 18 are deformed outward by the tightening of the set screws 30 to conform the conductor to the sidewall 38 of the bore 20.

The connector lug 10 of the embodiment provides improved interference fit through the ridges 32 extending inward from a portion 38b of the sidewall 38 opposite the bearing surfaces 34 of the set screws 30.

-8-

The ridges 32 are disposed generally midway between the axes of adjacent threaded openings 28. Preferably, the sidewall portion 38b opposite the threaded openings is enlarged to extend radially outward giving the sidewalls 38 a generally oval shape and leaving the ridges 32 with inner rims 106 which are continuous of the circular cross-section of the sidewall portion 38a through which the threaded opening 28 extend.

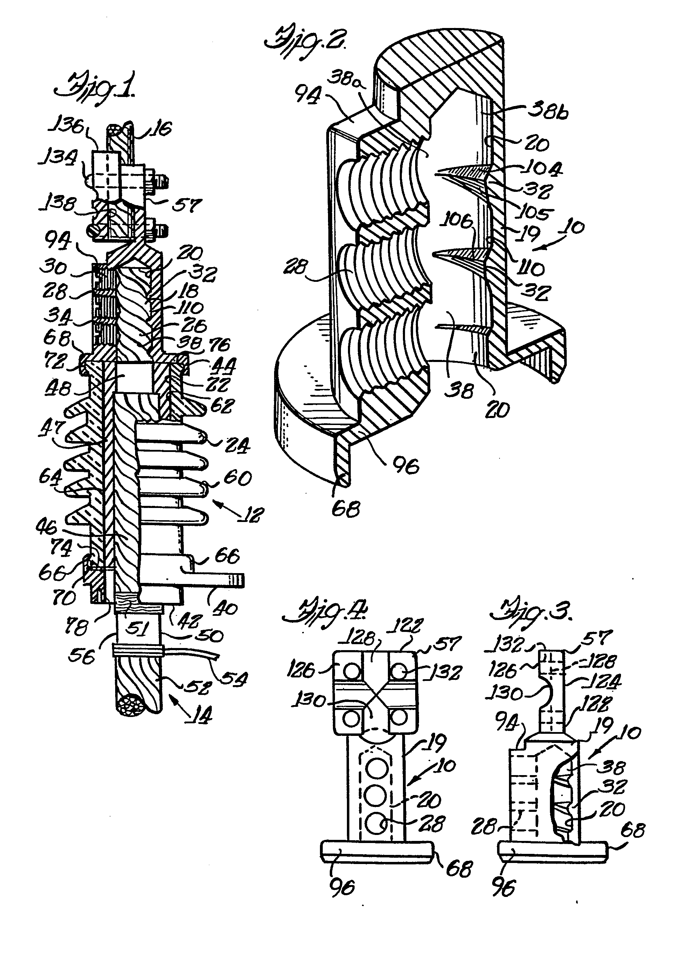

The ridges have their greatest height, i.e., about 1/16th inch, relative to the enlarged sidewall portion 38b at their midpoints and blend into the sidewall 38 at their ends. The ridges 32 each have sloped sides 104, 105 (FIG. 2) which angle inward from the enlarged sidewall portion 38b preferably at an angle of about 30° to about 70°. Preferably, the side 104 of each ridge toward the aerial end has the steeper slope, i.e., between about 50° and about 70° relative to the enlarged sidewall portion 38b while the side 105 toward the base end has a more gentle slope, i.e., between about 30° and about 45°.

The bared end 26 of the conductor 18 is inserted axially into the bore of the lug through the cylindrical passageway defined by the rims 106 of the ridges and the circular sidewall portion 38. If during insertion, the conductor 18 contacts the rims 106 or gently sloped sides 105, of the ridges, it glances thereover and inserts easily into the lug.

When the set screws 30 are tightened against the conductor 18, not only do the strands deform outward, but the screws 30 press the conductor end 26 into a sinuous configuration. The assumed configuration cooperates with the steeply sloped sides 104 of the ridges 32 to provide greater resistance to pull-out than a conventional lug hood with a smooth walled bore. Even if the set screws 30 should loosen slightly or the strands of the conductor 18 deform, thereby reducing the torque of the set screws against the conductor, the conductor end 26 maintains adequate interference fit with the screws and the sidewall 38 to resist pull-out forces. In addition to improved pull-out resistance, the deformation of the conductor 18 along the ridges 31 and valleys 110 of the enlarged sidewall portion 38b increases the surface contact between the conductor and the sidewall reducing electrical resistance therebetween and consequent heat build-up in the connector lug 10.

For connector lugs 10 formed of aluminium, the ridges 32 also improve the electrical connection between the conductor 18 and the connector lug by providing a conductor-lug interface more resistant to oxide buildup. A difficulty with aluminium electrical fittings is the buildup of the layer of oxide which inevitably occurs when aluminium is exposed to air. Because aluminium oxide is nonconductive, the lug 10 is preferably tin plated, and the conductor 18 is commonly coated with an abrasive anti-oxidant material such as that sold under the trade name Penetrox. When the set screws 30 are torqued against the conductor 18, strands of the conductor are pressed against and impressed slightly into the narrow ridges 32 forming an interface which is highly resistive to oxidation. Because of the impression of the conductor 18 into the relatively soft aluminium, it is good practice to retighten the set screws 30 a short period after the initial tightening.

The extension 57 provides surfaces appropriate for joining the shielded cable to a second cable 16 such as an aerial conductor or an electrical bus bar (not shown) and will have the configuration required for the application. In the illustrated embodiment, the extension 57 (FIGS. 3,4) is a generally square plate 122 having a flat back surface 124 which may be connected to a bus bar and a front surface 126 with intersecting semi cylindrical troughs 128, 130 for receiving the end of an aerial conductor 16 either axially or transversely. A first trough 128 has an axis along or generally parallel to the axis of the terminator, and the second trough 130 has an axis generally transverse to the terminator axis. Four holes 132 are provided along the intersecting troughs through which a pair of U-bolts 134 may be inserted to attach a clamp type lug 136 with a complementary half cylindrical trough 138 in an interference fit with the aerial conductor 16.

Tests were successfully performed per applicable industry standards.

Although the invention has been described in terms of a preferred embodiment, modifications obvious to one with ordinary skill in the art may be made without departing from the scope of the invention. The improved connector lug has been described in connection with a relatively simple terminator, but it is equally suitable for use with terminators of more sophisticated design. While the invention has been described in reference to the connection of a grounded cable with an aerial cable, it may be used to connect any shielded cable with a second cable. Two shielded cables might be connected through two terminators interconnected by a connector lug having two hood portions such as described herein.

Various features of this invention are set forth in the following claims.

-11-

CLAIMS:

1. A connector lug for an electrical terminator comprising, a hood portion and attachment means on one end thereof for securing said connector lug to the body of the terminator, a bore extending into said hood portion from the end attachable to the terminator body, threaded opening means communicating said bore exteriorly through the side of said hood portion and cooperating set screw means received in said threaded opening means for forming a compression fit with an exposed end of a cable, an extension portion attachable to a second cable, characterised by ridge means in said bore extending inward of the sidewall thereof opposite said threaded opening means for achieving a more secure compression fit of the exposed cable end when said set screw means is torqued thereagainst.

2. A connector lug according to Claim 1 wherein said threaded opening means comprises at least two threaded openings spaced apart in an axial direction and said ridge means comprises at least one ridge disposed therebetween in an axial direction.

3. A connector lug according to Claim 1 wherein said ridge means comprises at least one ridge having a greatest extension into said bore means at least about 1/16th the diameter of said bore.

4. A connector lug according to any preceding claim wherein said bore means is closed at one end.

5. A connector lug according to any preceding claim formed as a unitary piece.

6. An electrical terminator including: an insulating shell having a passageway therethrough, a layer of dielectric material within at least a portion of said passageway providing an electrical gradient for

-12-

a prepared end of a shielded cable, said layer of dielectric material having a passageway therethrough for passage of the prepared cable end, and a connector lug having a hood portion connected at one end to said insulating shell and an extension portion for connection to a second cable, said hood portion having a bore coextensive with the passageway through said insulating shell, threaded openings means communicating said bore means exteriorly through the side of said hood portion, cooperating set screw means received in said threaded opening means for forming a compression fit with an exposed end of the cable conductor, an extension portion attachable to a second cable, characterised by ridge means in said bore extending inward of the sidewall thereof opposite said threaded opening means for achieving more secure compression fit of the exposed end of the cable when said set screw means are torqued thereagainst.

7. A terminator according to Claim 6 wherein said threaded opening means comprises at least two threaded openings spaced apart in an axial direction and said ridge means comprises at least one ridge disposed therebetween in an axial direction.

8. A terminator according to Claim 6 wherein said ridge means comprises at least one ridge having a greatest extension into said bore means at least about 1/16th the diameter of said bore.

9. A terminator according to any one of Claims 6 to 8 wherein said bore means is closed at one end.

Fig.1.

Fig.2.

Fig.4.

Fig.3.

**0076046**

Application number

## EUROPEAN SEARCH REPORT

**European Patent Office**

EP    82 30 4670

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | --- <br> US-A-2 068 152  (TRUMBULL) <br><br> *Page 1, left-hand column, line 33 to right-hand column, line 48; figures 1-5* | 1,4-7, 9 | H 02 G   15/06 <br> H 01 R    4/36 |
| A | --- <br> US-A-2 015 896  (H.B.SHERMAN) <br> *Page 1, left-hand column, line 47 to page 2, right-hand column, line 6; figures 1-6* | 1,2,6 | |
| A | --- <br> FR-A-2 038 410  (BASSANI) <br> *Page 2, lines 4-17; figures 1-3* | 1,6,7 | |
| A | --- <br> US-A-2 285 529  (G & W EL SPECIALITY) <br> *Page 2, left-hand column, line 73 to page 3, left-hand column, line 45; figure 1* | 1 | |
| A,D | --- <br> US-A-3 796 821  (G & W EL SPECIALITY) <br> *Column 3, line 40 to column 6, line 45; figures 1,2* | 1 | TECHNICAL FIELDS SEARCHED (Int. Cl. 3) <br><br> H 02 G   15/00 <br> H 01 R    4/00 |
| A,D | --- <br> US-A-3 290 428  (JOSLYN) <br><br> *Column 3, line 53 to column 5, line 17; figures 1,2* | 1,4,5, 9 | |
| | ----- | | |

The present search report has been drawn up for all claims

| Place of search <br> THE HAGUE | Date of completion of the search <br> 22-12-1982 | Examiner <br> LOMMEL A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82